# EUROPÄISCHE PATENTSCHRIFT

(11) **EP 0 947 568 B1**
(45) Veröffentlichungstag und Bekanntmachung des Hinweises auf die Patenterteilung: **06.05.2004**
(21) Anmeldenummer: 99250057.9
(22) Anmeldetag: 02.03.1999
(51) Int. Cl.: C09D 11/00

(54) **Tinte zur Erzeugung von Sicherheitsabdrucken**
Ink for the generation of security prints
Encre pour la réalisation d'impressions de sécurité

(30) Priorität: 28.03.1998 DE 19815358
(43) Veröffentlichungstag der Anmeldung: 06.10.1999
(73) Patentinhaber: Francotyp-Postalia AG & Co. KG, 16547 Birkenwerder (DE)
(72) Erfinder: Roussos, Georges, Dr., 10625 Berlin (DE)

(56) Entgegenhaltungen:
- EP-A- 0 487 033
- US-A- 5 091 006
- PATENT ABSTRACTS OF JAPAN vol. 017, no. 154 (C-1040), 26. März 1993 & JP 04 320466 A (MITSUI TOATSU CHEM INC), 11. November 1992

## Beschreibung

Die Erfindung betrifft eine Tinte zur Erzeugung von Sicherheitsabdrucken. Derartige Tinten werden für Sicherheitsabdrucke auf Dokumenten eingesetzt, bei denen es auf Fälschungssicherheit ankommt. Das können beispielsweise Postfrankierungen, Ausweise, Banknoten, Fahrscheine oder Lotteriescheine sein.
Es ist allgemein bekannt, bei Banknoten Merkmale aufzudrucken, die nur bei Beleuchtung mit ultraviolettem Licht auf Grund emittierter Fluoreszenz lesbar sind.
Die Anforderungen an die Fälschungssicherheit beziehungsweise Nichtkopierbarkeit derartiger Sicherheitsabdrucke steigen ständig und sind mit einem erheblichen technischen Aufwand verbunden.
So ist seitens der US-Post ein Regelung in Vorbereitung, nach der Briefe mit kryptografisch verschlüsselten Daten zu versehen sind, die einer digitalen Unterschrift entsprechen, siehe United States Postal Service "Information Based Indicia Programm (IBIP) for Open Systems" July 23, 1997. Drucktechnisch ist dafür ein Drucker mit einer Auflösung erforderlich, die einem Laserdrucker entspricht.

Es ist eine Fluoreszenztinte bekannt, siehe EP 0 487 033 B1, die als homogene Lösung ausgeführt ist, die eine erste Farbe bei Bestrahlung mit weißem Licht und eine rote fluoreszierende Farbe bei Bestrahlung mit ultraviolettem Licht aufweist. Die Lösung enthält einen roten Fluoreszenzfarbstoff und einen nicht-roten sichtbaren Farbstoff, der zu der spektralen Sensibilisatorklasse von Farbstoffen gehört, die sich innerhalb eines Harzes befinden und in einem polaren organischen Lösungsmittel aufgelöst sind. Der nicht-rote sichtbare Farbstoff besteht aus einem Polymethin-Farbstoff, einem Arylcarbonium-Farbstoff und einem Xanthen-Farbstoff. Eine Lesbarkeit für den IR-Bereich ist nicht gegeben.

In EP 0 711 814 A2 wird eine Tintenkomposition beschrieben, die Fluoreszenz im sichtbaren oder im infraroten Bereich aufweist.

Weiterhin ist bekannt, siehe W0 96/18972, Bar Code in zwei Schichten unterschiedlicher Wellenlänge übereinander abzudrucken, wobei die obere Schicht transparent ausgeführt ist. Dieses Druckverfahren ist technologisch aufwendig und erfordert höchste Präzision.

Schließlich ist eine homogene fluoreszierende Tinte bekannt, vergleiche US 5 091 006, die aus Lösungsmitteln für Farbträger für den UVfluoreszierenden Bereich und polaren organischen Lösungsmitteln für den sichtbaren Bereich zusammengesetzt sind. Ein Farbträger für den IR-Bereich fehlt.

Allen diesen Tinten ist gemeinsam, daß mit ihnen nur Abdrucke erzeugbar sind, die lediglich zweifach gesichert sind.

Zweck der Erfindung ist eine Verbesserung der Fälschungssicherheit mit einfachen Mitteln.

Der Erfindung liegt die Aufgabe zugrunde, eine Tinte anzugeben, mit der in einem Druckvorgang ein Abdruck erzeugbar ist, der dreifach gesichert ist. Der Abdruck soll mittels herkömmlicher Drucktechnik, wie Tintenstrahldruck, erzeugbar sein.

Erfindungsgemäß wird diese Aufgabe gemäß dem Hauptanspruch gelöst. Weitere vorteilhafte Merkmale der Erfindung sind den Unteransprüchen zu entnehmen.
Diese Tinte ist besonders für den Einsatz in Tintendruckern nach dem "drop and demand"-Prinzip geeignet. Mit diesen Druckern wird ein Rasterdruck erzeugt, bei dem beliebige Abwandlungen des Sicherheitsabdruckes lediglich durch entsprechende Gestaltung der Druckbefehle auf einfache Weise möglich sind. Darüber hinaus ist diese Tinte auch für Walzen- oder Siebdruck geeignet.
Die Erfindung wird nachstehend an Ausführungsbeispielen näher erläutert.

### Beispiel 1:

Rezeptur auf Wasserbasis mit breitbandigem Infrarot-Absorber für den Bereich 750 bis 1050 nm; vorgesehen für den Einsatz von Lesegeräten mit Silizium-IR-LED's

| Gewichtsanteil in % | | Ingredienz | Lieferant |
|---|---|---|---|
| typisch | bevorzugt | | |
| 0,5 - 5 | 2,5 | Laser Red 3 | BASF |
| 0,5 - 5 | 2,5 | Basonyl Rot 482 | BASF |
| 0,5 - 5 | 3 | Pro-Jet IR BW, wie Typ S109564 | ICI |
| 20 - 50 | 35 | Wasser, deionisiert | |
| 20 - 35 | 30 | Propandiol | Merck |
| 10 - 20 | 20 | Diethylenglykolmonoethylether | Merck |
| 2 - 8 | 7 | Glyzerin | Merck |
| 0,02- 0,1 | 0,05 | Proxel X | ICI |

### Beispiel 2:

Rezeptur auf Wasserbasis mit schmalbandigem Infrarot-Absorber für den Bereich 700 bis 750 nm, vorgesehen für den Einsatz von Lesegeräten mit Laserdioden

| Gewichtsanteil in % | | Ingredienz | Lieferant |
|---|---|---|---|
| typisch | bevorzugt | | |
| 0,5 - 5 | 2,5 | Laser Red 3 | BASF |
| 0,5 - 5 | 2,5 | Basonyl Rot 482 | BASF |
| 0,5 - 5 | 3 | Pro-Jet IR NW, wie Typ S116510 | ICI |
| 20 - 50 | 35 | Wasser, deionisiert | |
| 20 - 35 | 30 | Propandiol | Merck |
| 10 - 20 | 20 | Diethylenglykolmonoethylether | Merck |
| 2 - 8 | 7 | Glyzerin | Merck |
| 0,02- 0,1 | 0,05 | Proxel X | ICI |

## Patentansprüche

1. Tinte zur Erzeugung von Sicherheitsabdrucken, **dadurch gekennzeichnet,**
**daß** eine homogene Lösung, deren Lösungsmittel auf Wasser basiert, Farbträger, die eine sichtbare Farbe außer schwarz aufweisen,
Farbträger, die eine mit ultraviolettem Licht anregbare, sichtbare fluoreszierende Farbe aufweisen, und
Farbträger, die eine Absorption im infraroten Spektralbereich aufweisen, enthält.

2. Tinte nach Anspruch 1, **dadurch gekennzeichnet,**
**daß** der Farbträger für die Absorbtion im infraroten Bereich so gewählt ist, daß ein breitbandiger Bereich von 750 bis 1050 nm gegeben ist, der den Einsatz von Lesegeräten mit Silizium- IR-LED's ermöglicht.

3. Tinte nach Anspruch 1, **dadurch gekennzeichnet,**
**daß** der Farbträger für die Absorption im infraroten Bereich so gewählt ist, daß ein schmalbandiger Bereich von 700 bis 750 nm gegeben ist, der den Einsatz von Lesegeräten mit Laserdioden ermöglicht.

## Claims

1. Ink for the production of security prints, **characterized in that** a homogenous solution the solvent of which is based on water contains
colour carriers having a visible colour other than black,
colour carriers having a visible fluorescent colour excitable by ultraviolet light, and
colour carriers showing absorption in the infrared spectral region.

2. Ink according to claim 1, **characterized in**
**that** the colour carrier causing absorption in the infrared region is chosen in such a way that it provides for a broad-band range from 750 to 1050 nm that allows for the use of readers with silicon infrared LEDs.

3. Ink according to claim 1, **characterized in**
**that** the colour carrier causing absorption in the infrared region is chosen in such a way that it provides for a narrow-band range from 700 to 750 nm that allows for the use of readers with laser diodes.

## Revendications

1. Encre pour la fabrication de reproductions de sécurité, **caractérisée par le fait que**,
une solution homogène, dont le dissolvant est à base d'eau,
contient des supports de couleur qui présentent une couleur visible hormis le noir,
des supports de couleur qui présentent une couleur excitable avec de la lumière ultra-violette, fluorescente de façon visible et
des supports de couleur qui présente une absorption dans le domaine spectral à infra-rouge.

2. Encre selon la revendication 1, **caractérisée par le fait que**
le support de couleur pour l'absorption dans le domaine infra-rouge est choisi de sorte à disposer d'un domaine à large bande de 750 à 1050 nm qui permet l'utilisation de lecteurs avec DEL à infra-rouge au silicium.

3. Encre selon la revendication 1, **caractérisée par le fait que**
le support de couleur pour l'absorption dans le domaine infra-rouge est choisi de sorte à disposer d'un domaine à bande étroite de 700 à 750 nm qui permet l'utilisation de lecteurs avec des diodes laser.
